Europäisches Patentamt

European Patent Office

Office européen des brevets

(11) Veröffentlichungsnummer: **0 151 971**

A2

(12) # EUROPÄISCHE PATENTANMELDUNG

(21) Anmeldenummer: 85100627.0

(22) Anmeldetag: 22.01.85

(51) Int. Cl.⁴: **F 16 H 21/22**
**B 26 B 19/28**

(30) Priorität: 11.02.84 DE 8404174 U

(43) Veröffentlichungstag der Anmeldung:
21.08.85 Patentblatt 85/34

(84) Benannte Vertragsstaaten:
AT DE FR GB NL

(71) Anmelder: Braun Aktiengesellschaft
Rüsselsheimer Strasse 22
D-6000 Frankfurt/Main(DE)

(72) Erfinder: Messinger, Werner
Schmiedeberger Strasse 18
D-6242 Kronberg/Ts(DE)

(72) Erfinder: Trölltsch, Karl
Idsteiner Strasse 61
D-6000 Frankfurt/M.(DE)

(74) Vertreter: Einsele, Rolf
Braun Aktiengesellschaft Postfach 1120 Frankfurter
Strasse 145
D-6242 Kronberg Taunus(DE)

(54) Schwingbrücke.

(57) Bei einer Schwingbrücke zur Umwandlung der Drehbewegung eines von einer Motorwelle angetriebenen Exzenters in eine hin- und hergehende Bewegung des Abtriebs für ein Werkzeug bei elektrisch angetriebenen Kleingeräten, insbesondere Trockenrasierapparaten, bestehend aus einem den Abtrieb aufweisenden, vorzugsweise zwei elastische Haltearme umfassenden Brückenjoch und einem den Exzenter mit der Schwingbrücke verbindenen Pleuel ist dessen vorzugsweise mittels eines ihm zugehörigen Filmscharniers quer zur Abtriebsbewegung der Schwingbrücke schwenkendes, vom Exzenter angetriebenes starres Teilstück aus einem Hohlkörper, vorzugsweise aus einer Wände gleicher Stärke aufweisenden Kastenkonstruktion gebildet.

FIG.2

FIG.3

EP 0 151 971 A2

05 082

0201 5 1971

Die Neuerung betrifft eine Schwingbrücke zur Umwandlung der Drehbewegung eines von einer Motorwelle angetriebenen Exzenters und eine hin- und hergehende Bewegung eines Abtriebs für ein Werkzeug bei elektrisch angetriebenen Kleingeräten, insbesondere Trockenrasierapparaten, bestehend aus einem den Abtrieb aufweisenden, vorzugsweise zwei elastische Haltearme umfassenden Brückenjoch und einem den Exzenter mit der Schwingbrücke verbindenden Pleuel.

Ein für Trockenrasierapparate bestimmtes Schwingsystem umfaßt eine starre, einstöckige Pleuelstange, die einerseits mit dem Antriebszapfen des antreibenden Exzenters - diesem als Lager dienend - in Getriebeverbindung steht und andererseits über ein Gelenk an ein den Klingenblock mitnehmendes längsgeführtes Kupplungsstück angreift und dieses während je einer Umdrehung des antreibenden Exzenters in eine hin- und herschwingende Bewegung versetzt (JP 57-60788).

Ein derart ausgebildetes Schwingsystem ist insofern nachteilig, als es - im Gegensatz zu einem Schwingankerantrieb - aus relativ vielen Bauteilen besteht, die darüber hinaus - wie beispielsweise die dem Bewegungausgleich dienenden Elemente - recht aufwendig und - da massiv - gewichtsbelastend ausgebildet sind, woraus sowohl hinsichtlich des Apparategewichtes als auch hinsichtlich der Störanfälligkeit des gesamten Rasierertriebwerkes sich auswirkende Mängel in Kauf genommen werden müssen.

Um diesen Mängeln abzuhelfen, sind Schwingsysteme für derartige Geräte entwickelt worden, die eine Schwingbrücke umfassen, die mittels zweier elastischer und damit Gelenkfunktion ausübender Haltearme - beispielsweise in Form eines Filmscharniers - am Gerätegehäuse aufgehängt ist und mittels eines ihr angeformten, ebenfalls ein elastisches, also Gelenkfunktion ausübendes Teilstück umfassenden Pleuels mit dem antreibenden Exzenter des

...

Kleingerätes in Getriebeverbindung steht.

Eine solche Schwingbrücke behebt zwar die wesentlichen Nachteile der zuvor diesen Kleingeräten zugeordneten exzentergesteuerten Schwingsysteme im wesentlichen durch ihre masseverringernde Aufhängung am bzw. im Gerätegehäuse, welche die Anordnung aufwendiger und relativ schwerer, beispielsweise als Doppelhebel ausgebildeter Gelenke erübrigt. Dasselbe trifft für den der Schwingbrücke angeformten Pleuel zu, dessen zur Umwandlung der antriebsseitigen Drehbewegung in die abtriebsseitige Schwingbewegung erforderliche Ausgleichsbewegung mittels des ihm eingeformten elastischen Teilstücks erzielt wird, wodurch auch hier die Anordnung masse- und volumenerhöhender Getriebeelemente entbehrlich wird.

Aufgabe der Neuerung ist es nun, eine Schwingbrücke der eingangs genannten Art zu schaffen, die - insbesondere hinsichtlich ihres Antriebs - sich durch einen besonders masse- und zugleich gewichtsmindernde Konzeption auszeichnet.

Gelöst wird diese Aufgabe mit der nach dem Oberbegriff des Schutzanspruchs 1 ausgebildeten Schwingbrücke gemäß der Neuerung im wesentlichen dadurch, daß das vorzugsweise mittels eines ihm zugehörigen Filmscharniers quer zur Abtriebsbewegung der Schwingbrücke schwenkende, vom Exzenter angetriebene starre Teilstück des Pleuels aus einem Hohlkörper gebildet ist.

Eine derartige Pleuelkonzeption zeichnet sich gegenüber den aus vollem Material bestehenden Pleuel durch überraschend hohe Stabilität aus, insbesondere bei gleicher Bemessung der Wandstärken des einen Hohlkörper bildenden starren Teilstückes des Bleuels.

Diesen Erfordernissen wird der Antrieb der Schwingbrücke nach der Neuerung insbesondere dadurch gerecht, daß das vom Exzenter angetriebene starre Teilstück des Pleuels eine Wände gleicher Stärke aufweisende Kastenkonstruktion bildet.

...

0151971

Eine auf die spezielle Pleuelfunktion abgestimmte, einen besonders guten Materialfluß sichernde Konzeption des Antriebs der Schwingbrücke nach der Neuerung ergibt sich jedoch, wenn das vom Exzenter angetriebene starre Teilstück des Pleuels ein stimmgabelförmiger Körper ist, dessen Gabelzinken durch den mit dem Exzenter des geräteseitigen Antriebs zusammenwirkenden Pleuelkopf miteinander abschließend verbunden sind.

Diese Konzeption hat nicht nur den Vorteil einer wesentlichen Verringerung des Pleuelgewichtes, sie wird darüber hinaus noch im besonderen Maße dem Bewegungsablauf des die Schwingbrücke antreibenden Pleuels gerecht, indem sie infolge der Anordnung zweier, einander parallel verlaufender Gabelzinken die zur Bewegungsumwandlung wichtige Elastizität auch des starren Teilstückes des der Schwingbrücke angeformten Pleuels gewährleisten.

Der Erhöhung der Stabilität des exzentergetriebenen Antriebs der Schwingbrücke dient es, wenn der das starre Teilstück des Pleuels bildende stimmgabelförmige Körper wenigstens einen seine beiden Gabelzinken etwa in deren Längsmitte verbindenden Quersteg aufweist.

Im Sinne eines funktionsgerechten Aufbaus des antreibenden Teiles der Schwingbrücke ist es schließlich, das Filmscharnier dem den Stiel der Stimmgabel bildenden, der Schwingbrücke unmittelbar angeformten Endstück des Pleuels zuzuordnen.

Der Gegenstand der Neuerung ist nachstehend anhand der Zeichnung in einem Ausführungsbeispiel näher erläutert. Es zeigen

Figur 1     die Schwingbrücke mit dem geräteseitigen Exzentertrieb in Seitenansicht,

...

Figur 2   die Schwingbrücke mit dem ihr zugehörigen stimmgabelförmigen Pleuel in Draufsicht,

Figur 3   eine Variante zu der in Figuren 1 und 2 dargestellten Schwingbrücke.

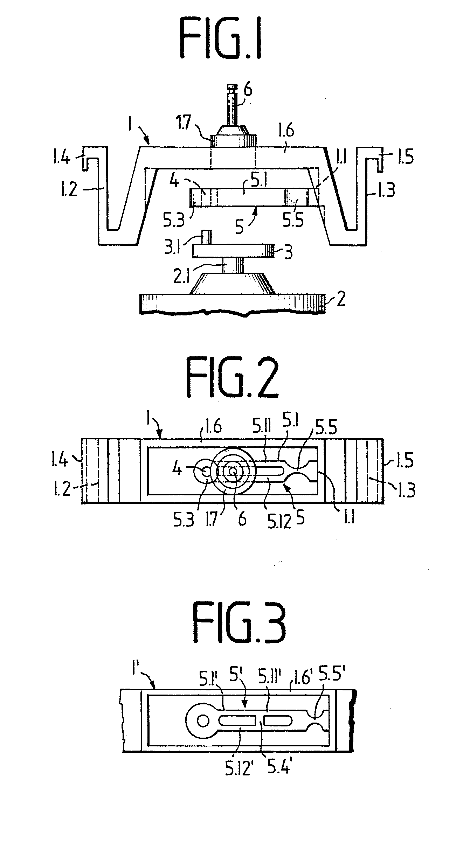

Wie die Figuren erkennen lassen, ist das die Schwingbrücke 1 umfassende Schwingsystem des elektrisch betriebenen Kleingerätes gebildet aus einem auf der rotierenden Antriebswelle 2.1 des beispielsweise aus einem Elektromotor gebildeten geräteseitigen Antriebs 2 sitzenden Exzenter 3, dessen exzentrisch angeordneter Mitnehmerzapfen 3.1 in eine Bohrung 4 des Kopfes 5.3 eines bei 1.1 der Schwingbrücke 1 angeformten Pleuels 5 eingreift. Der besseren Übersicht wegen ist gemäß Figur 1 dieser Eingriff durch die miteinander fluchtende Stellung des Zapfens 3.1 und der Bohrung 4 in der hier auseinandergezogenen Darstellung des geräteseitigen Antriebs 2, 3 und des Pleuels 5 der Schwingbrücke 1 angedeutet. Der Pleuel 5 ist in unmittelbarer Nähe seines der Schwingbrücke 1 angeformten Endes 1.1 mit einer ein Filmscharnier 5.5 bildenden Einschnürung versehen, die in an sich bekannter Weise dem Bewegungsausgleich zwischen dem rotierenden Antrieb 2, 3 und der geradlinig hin- und herschwingenden Schwingbrücke 1 dient.

Die Schwingbrücke 1 ist - hier einem elektrischen Trockenrasierapparat zugeordnet - mit einer dem Brückenjoch 1.6 mittig zugeordneter Buchse 1.7 ausgestattet, in die ein Kupplungsstift 6 eingesetzt ist, der in an sich bekannter Weise mittels einer durch eine Druckfeder abgestützten Kupplungswippe in den unterhalb der Scherfolie des apparateseitigen Scherkopfes hin- und herschwingenden Klingenblock einknüpfbar ist.

Die Schwingbrücke 1 ist mittels zweier ihr angeformter elastischer dünnwandiger Haltearme 1.2 und 1.3, die vorteilhaft die Funktion

...

eines Filmscharniers haben, innerhalb des Gerätegehäuses festgelegt, was hier beispielsweise durch den Haltearmen angeformte hakenförmige Enden 1.4 und 1.5, die in ihnen zugeordnete vertikale Ausnehmungen des Gerätegehäuses von oben eingreifen, erfolgt.

Wie bereits erwähnt, erlaubt der das Filmscharnier 5.5 umfassende Pleuel 5, die kreisförmige Bewegung des Exzenters 3 in eine Schwingbewegung umzusetzen, woraus das geradlinige Hin- und Herschwingen der mittels seiner beiden Haltearme 1.2 und 1.3 am Gerätegehäuse elastisch aufgehängten Schwingbrücke 1 resultiert.

Um hierbei ein vom Gewicht möglichst wenig belastetes Hin- und Herschwingen des Pleuels 5 zu gewährleisten, ist dessen starres Teilstück hier als hohler bzw. "offener" Körper ausgestaltet, der vorteilhaft eine Wände gleicher Stärke aufweisende Kastenkonstruktion bildet. Gemäß den Figuren 1 bis 3 bildet das starre Teilstück des Pleuels 5 einen stimmgabelförmigen Körper 5.1, dessen Gabelzinken 5.11 und 5.12 durch den den Mitnehmer 3.1 des Exzenters 3 aufnehmenden Pleuelkopf 5.3 abschließend verbunden sind.

Der so ausgebildete Pleuel 5 erlaubt infolge seiner durch diese Gestaltung erhaltenen Aufteilung in zwei parallel zueinander verlaufende, jeweils nur eine geringfügige Masse umfassende äußerst schmale Arme - ein besonders gutes elastisches Anpassen an die kreisförmige Bewegung des dem geräte- bzw. apparateseitigen Antrieb 2 zugeordneten Exzenters 3, woraus - beim gemäß vorliegendem Ausführungsbeispiel als Trockenrasierapparat konzipierten elektrischen Kleingerät - eine relativ wenig energieverzehrende und wenig störanfällige Umsetzung der rotierenden Antriebsbewegung in die hin- und herschwingende Arbeitsbewegung des mit der Schwingbrücke 1 gekoppelten Klingenblockes unterhalb der dem Scherkopf des Trockenrasierapparates zugehörigen Scherfolie resultiert.

...

Eine Variante zu der in den Figuren 1 und 2 dargestellten Ausführung der Schwingbrücke zeigt die Figur 3. Hier ist der der Schwingbrücke 1 zugehörige und mittels des Filmscharniers 5.5' an dieser angelenkte Pleuel 5' im Bereich seines starren Teilstückes 5.1' mit einem Quersteg 5.4' ausgestattet, der - etwa mittig zur Längserstreckung des Teilstückes 5.1' - die beiden Gabelzinken 5.11' und 5.12' miteinander verbindet und damit - als Wände gleicher Stärke bildende Kastenkonstruktion - eine stabilisierenden Einfluß während der Schwingbewegung des Pleuels 5' ausübt.

- 8 -

Bezugszeichenliste

| | |
|---|---|
| 1 | Schwingbrücke |
| 1.1 | Ansatzpunkt bzw. Endstück für bzw. von 5 an 1 |
| 1.2 | |
| 1.3 | Haltearme von 1 |
| 1.4 | |
| 1.5 | Hakenförmige Enden von 1.2 und 1.3 |
| 1.6 | Brückenjoch von 1 |
| 1.7 | Buchse in 1.6 für 6 |
| | |
| 2 | Antrieb des elektrischen Kleingerätes |
| 2.1 | Antriebswelle von 2 |
| | |
| 3 | Exzenter auf 2.1 |
| 3.1 | Mitnehmer von 3 |
| | |
| 4 | Bohrung in 5.3 |
| | |
| 5 (5') | Pleuel |
| 5.1 (5.1') | Starres Teilstück von 5 (5'), stimmgabelförmiger Körper |
| 5.11 (5.11') | |
| 5.12 (5.12') | Gabelzinken von 5.1 (5.1') |
| 5.3 | Pleuelkopf |
| 5.4' | Quersteg von 5' |
| 5.5 (5.5') | Filmscharnier in 5 bzw. 5' |
| | |
| 6 | Kupplungsstift in 1.7 |

0151971

Schutzansprüche

1. Schwingbrücke zur Umwandlung der Drehbewegung eines von einer Motorwelle angetriebenen Exzenters in eine hin- und hergehende Bewegung eines Abtriebs für ein Werkzeug bei elektrisch angetriebenen Kleingeräten, insbesondere Trockenrasierapparaten, bestehend aus einem den Abtrieb aufweisenden, vorzugsweise zwei elastische Haltearme umfassenden Brückenjoch und einem den Exzenter mit der Schwingbrücke verbindenden Pleuel, dadurch gekennzeichnet, daß das vorzugsweise mittels eines ihm zugehörigen Filmscharniers (5.5) quer zur Abtriebsbewegung der Schwingbrücke (1) schwenkende, vom Exzenter (3) angetriebene starre Teilstück (5.1) des Pleuels (5) aus einem Hohlkörper gebildet ist.

2. Schwingbrücke nach Anspruch 1, dadurch gekennzeichnet, daß das vom Exzenter (3) angetriebene starre Teilstück (5.1) des Pleuels (5) eine Wände gleicher Stärke aufweisende Kastenkonstruktion bildet.

3. Schwingbrücke nach Anspruch 1 oder 2, dadurch gekennzeichnet, daß das vom Exzenter (3) angetriebene starre Teilstück (5.1) des Pleuels (5) ein stimmgabelförmiger Körper ist, dessen Gabelzinken (5.11 und 5.12) durch den mit dem Exzenter (3) des geräteseitigen Antriebs (2) zusammenwirkenden Pleuelkopf (5.3) miteinander abschließend verbunden sind.

4. Schwingbrücke nach Anspruch 3, dadurch gekennzeichnet, daß der das starre Teilstück des Pleuels (5') bildende stimmgabelförmige Körper (5.1') wenigstens einen seine beiden Gabelzinken (5.11' und 5.12') etwa in deren Längsmitte verbindenden Quersteg (5.4') aufweist.

...

5. Schwingbrücke nach Anspruch 3 oder 4, dadurch gekennzeichnet,
   daß das Filmscharnier (5.5, 5.5') dem den Stiel der Stimmgabel
   bildenden, der Schwingbrücke unmittelbar angeformten Endstück
   (1.1) des Pleuels (5, 5') zugeordnet ist.

# FIG.1

# FIG.2

# FIG.3